# EUROPEAN PATENT APPLICATION

(11) **EP 3 590 704 A1**
(43) Date of publication of application: **08.01.2020**
(21) Application number: 19183178.3
(22) Date of filing: 28.06.2019
(51) Int. Cl.: B32B 7/06, B32B 7/12, B32B 3/26, B65D 75/30, B65D 75/58, B65D 33/20

(54) **STAY FRESH FOOD BAG**

(30) Priority: 02.07.2018 IT 201800006864; 03.01.2019 IT 201900000064
(71) Applicant: Sit Group S.P.A., 47896 Faetano (Rep. San Marino) (SM)
(72) Inventor: SAPORITI, ANDREA, 47897 Fiorentino - San Marino (RSM) (SM); BARBIERI, ADRIANO, 47892 Acquaviva - San Marino (RSM) (SM); RIGHI, ALEXANDRO, 47895 Domagnano - San Marino (RSM) (SM); FERRARI, CHRISTIAN, 47895 Domagnano - San Marino (RSM) (SM); GUIDI, EMANUELE, 47895 Domagnano - San Marino (RSM) (SM); LAMBERTINI, ROSSANO, 47890 San Marino (RSM) (SM); PIERETTI, SIMONA, 61034 Fossombrone (PU) (IT); ROTANTE, Elisabetta, 40026 Imola (BO) (IT)
(74) Representative: Baldi, Claudio

(57) **Abstract**

Bag (200) obtained from at least one multilayer sheet (100) comprising: a first internal layer (3), a second external layer (4) with cut lines (6) that define a raisable tab (5), a permanent adhesive layer (71) between the first layer (3) and the second layer (4) and a non-permanent layer (70) disposed on one side (54) of the raisable tab (5) facing the first layer (3); the cut lines (6) are obtained only on the second layer (4) and the first layer (3) in correspondence of the raisable tab (5) is a continuous layer devoid of cut lines or openings; the adhesive portion (50) of the raisable tab occupies more than 50% of the surface of the raisable tab; the bag (200) is of roll-up type; the raisable tab (5) holds the rolled-up portion of the bag in rolled-up configuration.

## Description

### Descrizione

The present patent application for industrial invention relates to a bag for the packaging of food.

The reference field is the field of food bags that can be opened and re-closed to consume the food contained in the bag repeatedly over time.

Stay fresh bags are known, which protect the food, keeping its nutritive and organoleptic properties unaltered.

US2011 /253771 discloses a food packaging that comprises a sheet folded in such a way to form a package. The sheet is a multilayer sheet that comprises a raisable tab that generates an opening to provide access to the compartment of the package. The package is not closed by rolling up the bag on the opening, but it is closed by the raisable tab. The raisable portion contains an adhesive band only in one edge of the raisable portion and therefore the opening can be closed only in correspondence of the adhesive band of the raisable tab.

US2015/266645 discloses a lid for a container with a re-sealable tab. The lid is composed of a multilayer film comprising a peel tab that generates an opening for having access to the compartment of the container. The container is not a rolled-up bag, but it is a rigid container.

Generally speaking, the stay fresh bags of roll-up type according to the prior art are impaired by the fact that they are difficult to open. In fact, in order to open the bag, the user needs to energetically pull the lateral walls of the bag in such a way to break the bag in correspondence of one end, or to cut the bag. In the first case, the opening is not precise and may damage the bag. In the second case, the user needs scissors in order to cut the bag.

The purpose of the present invention is to overcome the drawbacks of the prior art, by disclosing a stay fresh bag provided with simple, effective and inexpensive closure means, which are unlikely to get lost.

Another purpose is to disclose a simple, inexpensive process for making the sheets that are used for producing the bag according to the invention.

A further purpose is to provide a bag with closure means that can be easily grabbed by the user and are not impaired by the risk of getting separated easily.

Another purpose is to disclose a bag that can be open easily.

These purposes are achieved according to the invention with the characteristics of the appended independent claim 1.

Advantageous embodiments appear from the dependent claims.

The food bag according to the invention is defined by the independent claims 1 and 10.

For the sake of clarity, the description of the stay fresh bag of roll-up type according to the invention continues with reference to the appended drawings, which have a merely illustrative, not limiting value, wherein:
Fig. 1 is an axonometric view of a first embodiment of the bag according to the invention;
Fig. 2 is an axonometric view of the bag of Fig. 1, seen from another side;
Fig. 3 is the same as Fig. 1, except for the fact that the bag is open and the raisable tab is raised;
Fig. 4 is an axonometric view of the bag of Fig. 1 with a portion that is rolled-up and held by the raisable tab;
Fig. 5 is a side view of the bag of Fig. 4;
Fig. 6 is an axonometric view of a multilayer sheet of the bag of Fig. 1;
Fig. 6A is a sectional view taken along the line A-A of Fig. 6;
Fig. 6B is a sectional view taken along the line B-B of Fig. 6;
Fig. 7 is an axonometric view of a roll that comprises a plurality of multilayer sheets used for making the bag according to the invention;
Fig. 8 is a diagrammatic side view of a step of the production method of the roll of Fig. 7;
Figs. 9 to 12 are axonometric views of a second embodiment of the bag according to the invention, which illustrate the opening steps of the bag;
Fig. 13 is an axonometric view of a multilayer sheet of the bag of Fig. 9;
Figs. 14 to 17 are axonometric views of a third embodiment of the bag according to the invention, which illustrate the opening steps of the bag;
Fig. 18 is an axonometric view of the bag of Fig. 13 in closed condition;
Fig. 19 is an axonometric view of a multilayer sheet of the bag of Fig. 13.

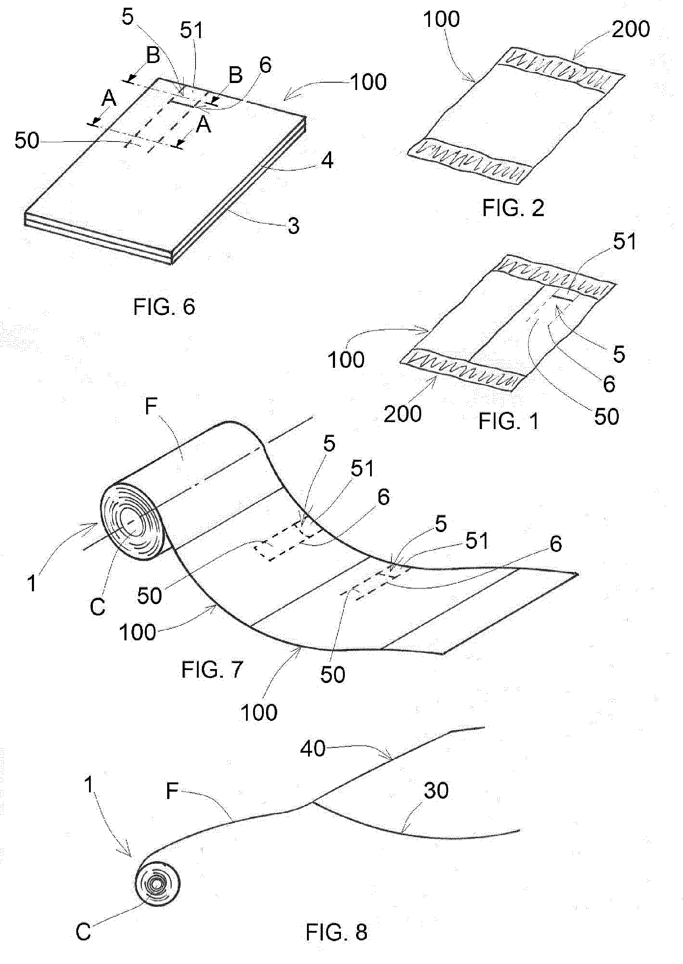

With reference to Figs. 1 to 5, a first embodiment of the stay fresh bag of roll-up type for food packaging is disclosed, which is generally indicated with reference numeral 200.

The bag (200) has a rectangular shape and comprises two lateral walls that are advantageously formed by a single sheet (100) that is folded and closed on the three lateral edges, for example by means of sealing. If the sheet is closed in the front, the sheet is sealed on the upper, lower and rear edge.

The lateral walls of the bag (200) define a compartment.

The lateral walls of the bag can be energetically pulled in order to separate them, breaking the upper or lower sealing in such a way to generate an opening that provides access to the compartment of the bag (200).

Alternatively, the bag (200) can be formed by multiple sheets (100) that are joined by means of sealing.

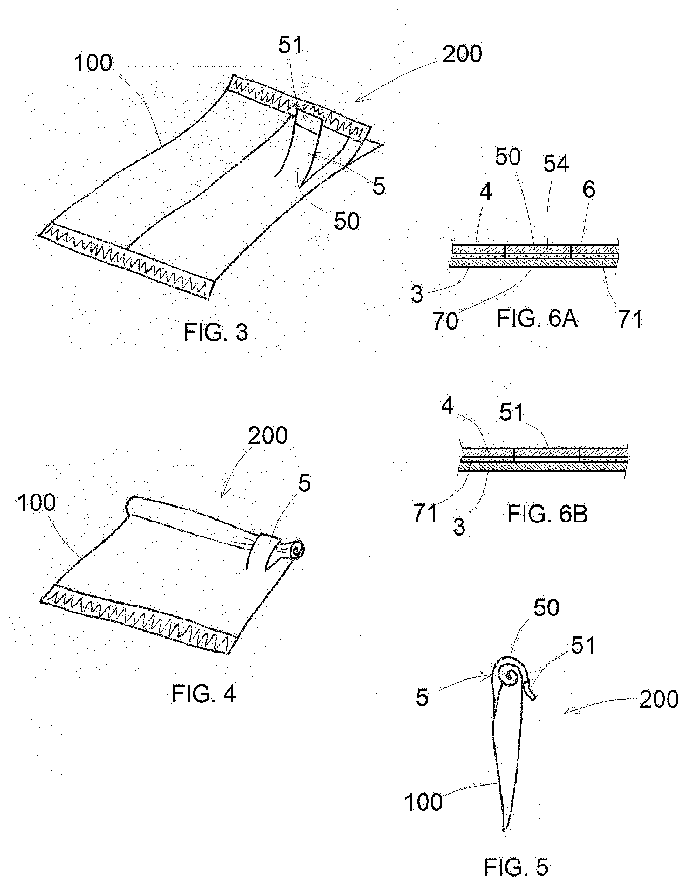

With reference to Figs. 6 and 6A, the sheet (100) is made of flexible non-rigid material, in such a way to be folded and rolled up. The sheet (100) is of multilayer type comprising:
- a first layer (3) suitable for facing the interior of the bag (200); and
- a second layer (4) suitable for facing the exterior of the bag (200).

The two layers (3, 4) are coupled together.

Although a multilayer sheet with two layers is illustrated in the figures, the multilayer sheet can comprise multiple intermediate layers disposed between the first layer and the second layer.

The second layer (4) comprises cut lines (6) that define a non-removable raisable tab (5). Such raisable tab (5) is advantageously disposed on the back of the bag (200), as shown in Figs. 1 and 3.

The cut lines (6) comprise two parallel sections disposed in perpendicular direction relative to an edge of the sheet (100), ending on said edge of the sheet (100) so as to obtain a rectangular raisable tab. Advantageously, in order to make the bag (200), the sheet (100) is folded in such a way that the raisable tab (5) ends in correspondence of the upper edge of the bag (200).

Alternatively, the cut lines may follow other trajectories in such a way to define a tab with a different shape.

In such a way, the raisable tab (5) can be detached on top and on the side from the remaining portion of the second layer (4) and is connected on the bottom to the remaining portion of the second layer (4) (Fig. 3).

The raisable tab (5) comprises an adhesive portion (50) and a non-adhesive end portion (51) that can be grabbed by the user. The end portion (51) is disposed in correspondence of the upper edge of the bag (200), and the adhesive portion (50) is connected on the bottom with the remaining portion of the second layer (4) of the sheet.

With reference to Fig. 6A, the multilayer sheet (100) comprises:
- a permanent adhesive layer (71) disposed between the first layer (3) and the second layer (4) of the multilayer sheet, in such a way to couple the first layer (3) with the second layer (4);
- a non-permanent adhesive layer (70) disposed on one side (54) of the raisable tab (5) facing the first layer (3) in such a way to form the adhesive portion (50) of the raisable tab.

The non-permanent adhesive layer (70) that forms the adhesive portion of the raisable tab may comprise, for instance, cold seal adhesive, pressure sensitive adhesive or thermosealing lacquers.

The permanent adhesive layer (71) that couples the first layer with the second layer of the sheet may comprise a solvent based adhesive, a solvent less adhesive, a water based adhesive, an extrusion lamination adhesive or a pressure sensitive adhesive.

As illustrated in Fig. 6B, the sheet (100) is devoid of adhesive in correspondence of the end portion (51) of the raisable tab in such a way that the end portion (51) can be easily grabbed by the user to raise the raisable tab (5).

Moreover, the permanent adhesive layer (71) can be uniformly disposed on the first layer (3) and the end portion (51) of the raisable tab can have a release paint layer. The release paint layer prevents the end portion (51) from adhering to the first layer (3) of the multilayer sheet.

Although not illustrated in the figures, the non-permanent layer (70) can be applied on the entire raisable tab, including the end section (51) of the raisable tab.

The cut lines (6) that define the tab are obtained only on the second layer (4) and the first layer (3) in correspondence of the raisable tab (5) is a continuous layer devoid of cut lines or openings, in such a way that by raising the raisable tab (5), the first layer (3) remains exposed, without generating an opening that provides access to the bag. Therefore, the first layer (3) of the multilayer sheet in correspondence of the raisable tab (5) is a continuous layer, devoid of interruptions or cut lines that generate an opening, in such a way that, by raising the raisable tab (5), the first layer is exposed, without generating any opening that provides access to the compartment of the bag.

The adhesive portion (50) of the raisable tab occupies more than 50%, advantageously more than 80%, of the surface of the raisable tab and acts as closure means to hold a rolled-up portion of the bag, in such a way to preserve the food inside the bag (200). In view of the above, the raisable tab has a large adhesive portion that can be used to hold the rolled-up portion of the bag in rolled-up configuration.

In fact, the bag (200) is of roll-up type, in such a way that a portion of the bag in correspondence of an opening can be rolled up in rolled-up configuration. The raisable tab (5) is disposed in such a way that the rolled-up portion of the bag can be held in such rolled-up configuration by means of the adhesive portion (50) of the raisable tab.

In view of the above, the user can open the bag (200) to take the contents out of the bag (Fig. 3), raise the raisable tab (5) (Fig. 3), roll-up the open portion of the bag (Figs. 4 and 5) and hold the rolled-up portion of the bag, disposing the adhesive portion (50) of the raisable tab on the rolled-up portion of the bag, in such a way to hold the rolled-up portion of the bag (Figs. 4 and 5).

Because of the provision of said adhesive portion (50) of the raisable tab, the bag (200) can be re-closed in a simple, effective way, without the risk of losing the adhesive portion (50), given that the adhesive portion (50) of the raisable tab is permanently joined with the remaining part of the second layer (4).

With reference to Fig. 7, the sheet (100) is obtained from a roll (1) comprising a roller (C) and a multilayer film (F) that is wound around the roller (C).

The multilayer film (F) is of roll-up type and comprises:
- a first layer (30), and
- a second layer (40) comprising a set of cut lines (6) that define a plurality of raisable tabs (5).

A permanent adhesive layer (71) is disposed between the first layer (30) and the second layer (40) of the film, in such a way to couple the first layer (30) with the second layer (40);

A non-permanent adhesive layer (70) is disposed on one side (54) of each raisable tab (5), facing the first layer (3) in such a way to form an adhesive portion (50) of the raisable tab.

The cut lines (6) that form the tab are only provided on the second layer (40) and the first layer (3) is a continuous layer devoid of cut lines or openings, in such a way that by raising the raisable tab (5) the first layer (30) is exposed, without generating any opening of the first layer (30).

The adhesive portion (50) of each raisable tab occupies more than 50% of the surface of the raisable tab, advantageously more than 80%, in such a way that the raisable tab has a large adhesive portion that can be used to hold a rolled-up portion of the bag in rolled-up configuration.

This description continues with reference to the production method of the roll (1).

With reference to Fig. 8, said method provides for arranging the roller (C) and making the multilayer film (F).

The multilayer film (F) is obtained by arranging the first layer (30) in the material of the first layer (3) of the sheet and a second layer (40) in the material of the second layer (4) of the sheet.

The non-permanent adhesive layer (70) is disposed on portions of one side (54) of the second layer (40) of the film.

The permanent adhesive layer (71) is disposed in the remaining area of the side of the second layer (40) of the film.

Optionally, a portion near the portion with the permanent adhesive layer (71) can be devoid of adhesive.

The second layer (40) of the film is disposed with the side comprising the adhesive layers (70, 71) on the first layer (30) of the film.

The second layer (40) of the film is provided with notches (6) in correspondence of the portions with the non-permanent adhesive (70) in such a way to generate the raisable tabs (5) of each bag, which are provided with an adhesive portion (50) composed of the non-permanent adhesive and with an end portion (51) composed of the portion devoid of adhesive.

Alternatively, the multilayer film (F) can be obtained by arranging the first layer (30) of film suitable for forming the first layer (3) of the sheet, and the second layer (40) of film suitable for forming the second layer (4) of the sheet.

A release paint layer is applied on portions of one side (54) of the second layer (40) of film.

The non-permanent adhesive layer (70) is disposed on portions of the side of the second layer (40) of film near the portions of the second layer with the release paint.

The permanent adhesive layer (71) is disposed on one side of the first layer (30) of film.

The first layer (30) of film is disposed with the side comprising the permanent adhesive layer (71) on the side of the second layer (40) of film comprising the release paint layer and the non-permanent adhesive layer (70).

The second layer (40) of film is provided with cuts (6) in correspondence of the portions with the non-permanent adhesive (70) and in correspondence of the portions with the release paint layer, in such a way to generate raisable tabs (5) with adhesive portions (50) with the non-permanent adhesive layer and end portions (51) with the release paint layer.

The release paint layer and the non-permanent adhesive layer do not bind with the permanent adhesive layer and therefore the raisable tabs (5) do not permanently adhere with the first layer (30) of film.

Regardless of the way in which the multilayer film (F) is produced, the portions of the secondary layer (40) of film that correspond to the adhesive portions (50) of the raisable tabs are completely covered with non-permanent adhesive (70), in such a way that the entire adhesive portions (50) of the raisable tabs can adhere to any portion of the bag.

The first layer of film is a continuous film, i.e. devoid of interruptions or cut lines that generate an opening, in such a way that, by raising the raisable tab (5), the first layer is exposed, without generating any through opening.

Optionally, an image can be printed on one side of the second layer (40) of film suitable for being disposed towards the exterior of the bag.

Regardless of the way in which the multilayer film (F) is produced, the production method of the roll (1) continues by winding the multilayer film (F) around the roller (C).

After obtaining the roll (1), said roll (1) can be disposed on an unwinding roller and the multilayer film (F) can be unwound to be sequentially cut in such a way to obtain the sheets (100).

The sheets (100) are folded in such a way to wrap the product to be contained and are sealed on three lateral edges, in such a way to close the bag (200) with the product inside.

The advantages of the method according to the invention are evident. In fact, in accordance with such method, multilayer sheets with raisable tabs can be obtained in a simple, inexpensive way, without having to modify the packaging machines.

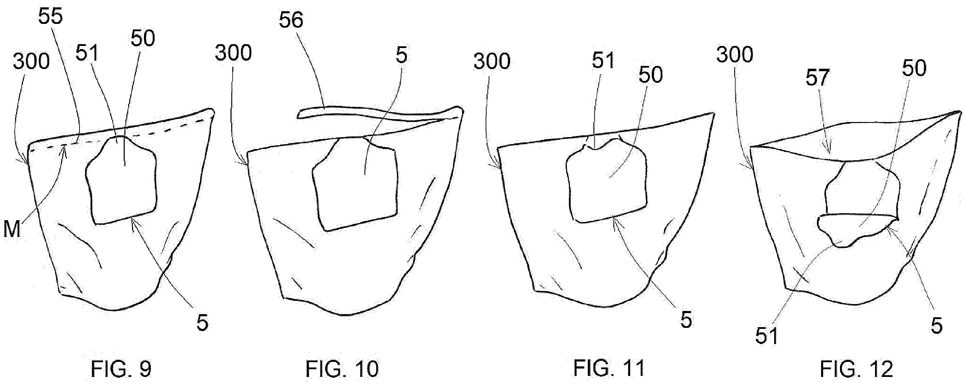

Figs. 9 to 13 disclose a second embodiment of the bag according to the invention, which is generally indicated with reference numeral (300).

In the following description the parts that are identical or correspond to the parts described above will be identified with the same numerals, omitting their detailed description.

The bag (300) is obtained from a sheet (100) that is folded and sealed on the edges or from multiple sheets (100) that are sealed to close the bag.

The bag (300) comprises a raisable tab (5) with an adhesive portion (50) and an end portion (51). The adhesive portion (50) permits to hold the bag in rolled-up configuration in correspondence of an opening of the bag, in order to close the bag (300).

The sheet (100) can be a multilayer or a monolayer sheet. If the sheet (100) is a multilayer sheet, such as the one described in the first embodiment, the raisable tab (5) is obtained by means of notches in the second layer of the multilayer sheet. If the sheet (100) is a monolayer sheet, the raisable tab (5) is adhered to the sheet (100).

The sheet (100) of each bag (300) comprises opening means (M) to open the bag, which generate an opening used to access the compartment of the bag (300).

The opening means (M) cooperate with the raisable tab (5) in such a way to permit the opening of the bag (300) and facilitate the raising of the raisable tab (5).

The opening means (M) comprise one or more pre-cut tear-off lines (55) obtained in the sheet (100), from one end to the other end of the sheet, in such a way to be turned in loop configuration around the bag to separate an upper portion (56) of the bag.

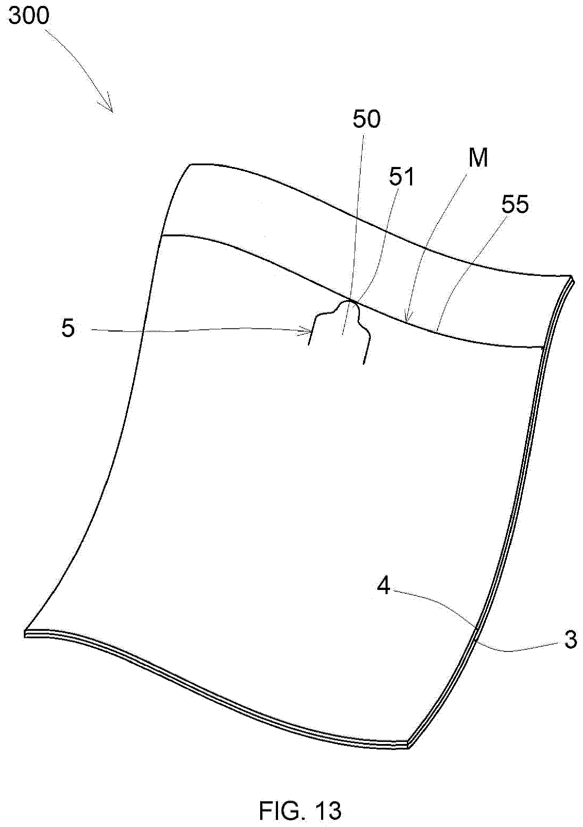

With reference to Fig. 13, if the sheet (100) is a multilayer sheet, the pre-cut line (55) is obtained on the first layer (3) or on the second layer (4) of the multilayer sheet.

If the multilayer sheet is formed by more than two layers, the pre-cut line (55) can be obtained on several layers, as long as at least one layer remains integral without pre-cut line.

A portion of the pre-cut line (55) crosses the raisable tab (5) or is tangent or coincident with a section of one edge of the adhesive portion (50) of the raisable tab or of the end portion (51) of the raisable tab.

In order to open the bag (300) the user needs to pull the upper portion (56) of the bag (300), in such a way to separate such upper portion (56) in correspondence of the pre-cut line (55) (Fig. 10). With reference to Fig. 12, after removing the upper portion (56) of the bag, an upper opening (57) of the bag is obtained, which provides access to the compartment of the bag with the products inside.

By removing the upper portion (56) of the bag (300), a portion of the raisable tab (5) is freed in such a way to be grabbed and raised (Figs. 11 and 12).

The end portion (51) of the raisable tab can have a temporary adhesive to be temporarily fixed to the sheet (100) when the bag (300) is produced. In view of the above, when the bag (300) is distributed for sale and has not been used yet, the end portion (51) of the raisable tab adheres to the sheet (100). This prevents the end portion (51) of the raisable tab from protruding from the sheet (100), hindering the handling of the bag.

Because of the fact that a section of the pre-cut line (55) of the opening means crosses the raisable tab or is tangent or coincident with a section of the raisable tab (5), the user can raise the raisable tab (5) in a simple and practical way.

The opening means (M) can be a tear-off band instead of a precise line, which is obtained in the sheet (100) and is capable of being pulled by the user to generate an opening in the sheet.

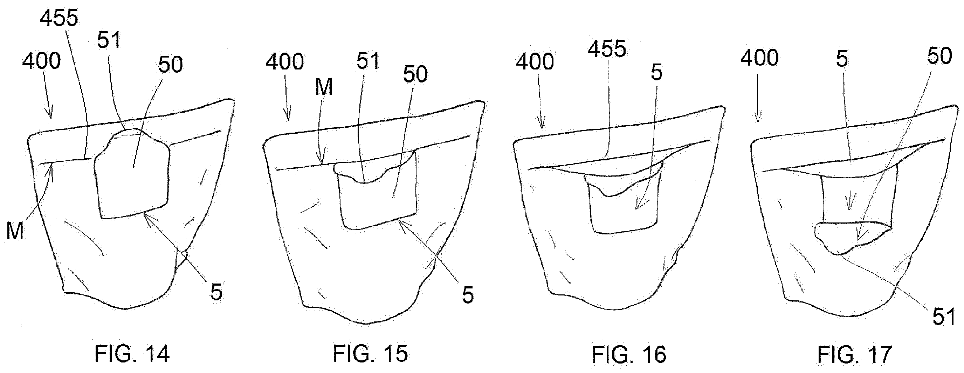

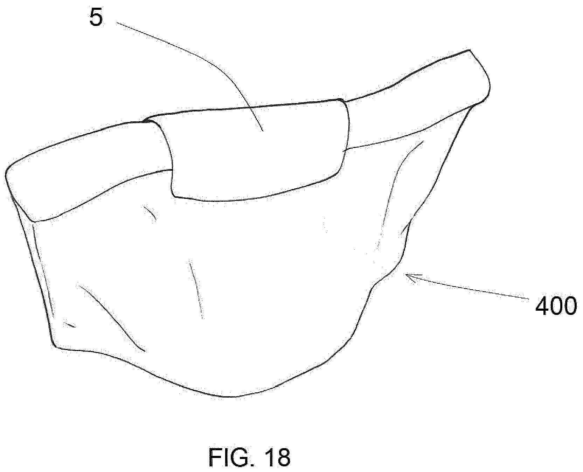

Figs. 14 to 19 disclose a third embodiment of the bag according to the invention, which is generally indicated with reference numeral (400).

The bag (400) is obtained from a sheet (100) that is folded and sealed on the edges or from multiple sheets (100) that are sealed together.

The bag (400) has a raisable tab (5) connected to the sheet, with an adhesive portion (50) and an end portion (51). The adhesive portion (50) permits to hold the bag in rolled-up configuration in correspondence of an opening of the bag in order to close the bag (400).

The sheet (100) can be a multilayer or a monolayer sheet. If the sheet (100) is a multilayer sheet, such as the one described in the first embodiment, the raisable tab (5) is obtained by means of notches in the second layer of the multilayer sheet. If the sheet (100) is a monolayer sheet, the raisable tab (5) is adhered to the sheet (100).

Each bag (400) comprises opening means (M) that permit to generate the opening of the bag (400) in such a way to provide the access to the compartment of the bag (400).

The opening means (M) cooperate with the raisable tab (5) in such a way to permit the opening of the bag (300).

The opening means (M) comprise a pre-cut tear-off line (455) disposed on the sheet (100). If only one sheet (100) is used to form the bag, the length of the pre-cut line (455) is lower than half of the length of the sheet, in such a way to appear only in one front side of the bag.

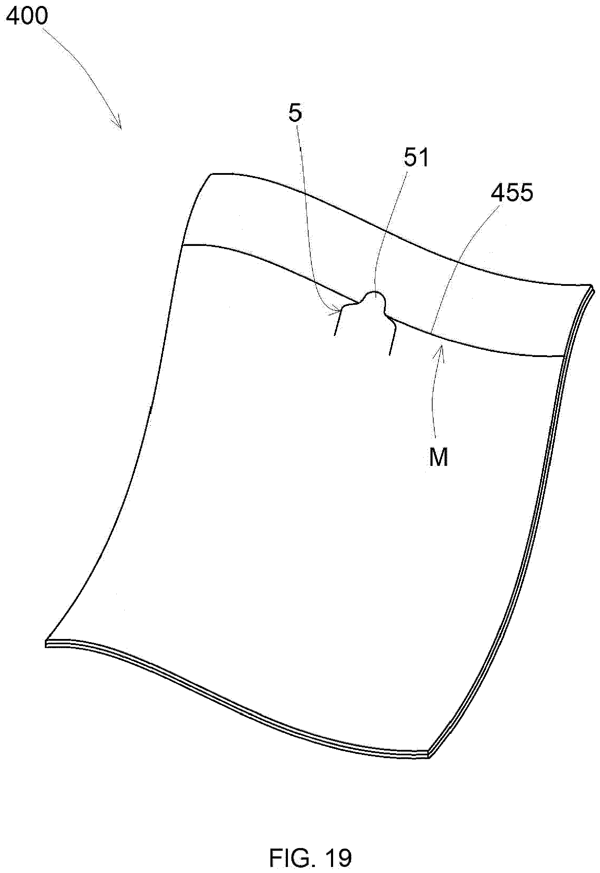

With reference to Fig. 19, if the sheet (100) is a multilayer sheet, the pre-cut line (455) is obtained on the first layer (3) continuously. Instead, on the second layer (4), the pre-cut line (455) is interrupted in correspondence of the raisable tab (5).

In order to open the bag (400), the user needs to grab the raisable tab (5) (Fig. 15) and pull the raisable tab (5), in such a way to generate an opening of the bag in correspondence of the pre-cut tear-off line (455) (Fig. 16).

Because of the opening means (M), the bag is open in a simple precise way without having to use sharp tools, which are not suitable for being used by children, and without any physical effort.

Instead of the pre-cut line, the opening means (M) may comprise a tear-off band disposed in said sheet (100) and suitable for tearing the sheet when it is pulled. In such a case, when the user pulls the raisable tab (5), the tear-off band is automatically pulled and the bag is opened.

Numerous variations and modifications can be made to the present embodiment of the invention, which are within the reach of an expert of the field, falling in any case within the scope of the invention as disclosed by the appended claims.

## Claims

1. Stay fresh bag (200) for food packaging obtained from at least one sheet (100) that is folded and sealed on the edges to close the bag; wherein
said sheet (100) is of multilayer type comprising:
- a first side (3) suitable for facing the interior of the bag;
- a second side (4) suitable for facing the exterior of the bag; said second layer (4) comprising a set of cut lines (6) that define a raisable tab (5);
- a permanent adhesive layer (71) disposed between the first layer (3) and the second layer (4) of the multilayer sheet, in such a way to couple the first layer (3) with the second layer (4);
- a non-permanent adhesive layer (70) disposed on a side (54) of the raisable tab (5) facing the first layer (3) in such a way to form an adhesive portion (50) of the raisable tab;
**characterized in that**
said cut lines (6) are obtained only on the second layer (4) and the first layer (3) in correspondence of the raisable tab (5) is a continuous layer devoid of cut lines or openings, in such a way that by raising the raisable tab (5) the first layer (3) is exposed, without generating any opening that gives access to the bag;
said adhesive portion (50) of the raisable tab occupies more than 50% of the surface of the raisable tab,
the bag (200) is of roll-up type, in such a way that a portion of the bag in correspondence of its opening can be rolled up in rolled-up configuration,
the raisable tab (5) is disposed in such a way that said rolled-up portion of the bag can be held in such rolled-up configuration by means of the adhesive portion (50) of the raisable tab.

2. The bag (200) of claim 1, wherein said raisable tab (5) comprises an end portion (51) devoid of adhesive in order to be grabbed by the user.

3. The bag (200) of claim 2, wherein said permanent adhesive layer (71) is uniformly disposed on the first layer (3) and said end portion (51) of the raisable tab has a release paint layer.

4. The bag (200) of any one of the preceding claims, wherein the cut lines (6) comprise two parallel sections in perpendicular position relative to an edge of the multilayer sheet (100) in such a way to obtain a rectangular raisable tab.

5. The bag (200) of any one of the preceding claims, wherein the cut lines (6) end on one edge of the multilayer sheet (100).

6. Roll (1) comprising a roller (C) and a multilayer film (F) wound around said roller (C); said multilayer film (F) comprising:
- a first layer (30);
- a second layer (40) comprising a set of cut lines (6) that define a plurality of raisable tabs (5);
- a permanent adhesive layer (71) disposed between the first layer (30) and the second layer (40) of the film, in such a way to couple the first layer (30) with the second layer (40);
- a non-permanent adhesive layer (70) disposed on one side (54) of each raisable tab (5) facing the first layer (3) in such a way to form an adhesive portion (50) of the raisable tab;
**characterized in that**
said cut lines (6) are obtained only on the second layer (40) and the first layer (3) is a continuous layer devoid of cut lines or openings, in such a way that by raising the raisable tab (5) the first layer (30) is exposed, without generating any opening of the first layer (30);
said adhesive portion (50) of each raisable tab occupies more than 50% of the surface of the raisable tab,
the multilayer film (F) is of roll-up type.

7. The production method of a roll (1) according to claim 6, comprising the following steps:
- providing a roller (C);
- providing a multilayer film (F);
- winding said multilayer film (F) around said roller (C).

8. The method of claim 7, wherein the multilayer film (F) is obtained with the following steps:
- providing a first layer (30) of film;
- providing a second layer (40) of film;
- disposing a non-permanent adhesive layer (70) on portions of one side of the second layer (40);
- disposing a permanent adhesive layer (71) in the remaining area of the side of the second layer (40), leaving a portion devoid of adhesive;
- disposing the second layer (40) with the side comprising the adhesive layers (70, 71) on the first layer (30);
- making a plurality of cuts (6) on the second layer (40) in correspondence of the portions with the non-permanent adhesive (70) in such a way to generate raisable tabs (5) with an adhesive portion (50) consisting in the non-permanent adhesive and with an end portion (51) consisting in the portion devoid of adhesive.

9. The production method of a roll (1) according to claim 7, wherein the multilayer film (F) is obtained by means of the following steps:
- providing a first layer (30) of film;
- providing a second layer (40) of film;
- applying a release paint layer on portions of one side of the second layer (40);
- disposing a non-permanent adhesive layer (70) on portions of one side of the second layer (40) near the portions of the second layer (40) with the release paint;
- disposing a permanent adhesive layer (71) on one side of the first layer (30);
- disposing the first layer (30) with the side comprising the permanent adhesive layer (71) on the side of the second layer (40) comprising the release paint layer and the non-permanent adhesive layer (70);
- making a plurality of cuts (6) on the second layer (40) in correspondence of the portions with the non-permanent adhesive (70) and in correspondence of the portions with the release paint layer, in such a way to generate raisable tabs (5) with adhesive portions (50) with the non-permanent adhesive layer and end portions (51) with the release paint layer.

10. Stay fresh bag (300, 400) for food packaging, obtained from at least one sheet (100) that is folded and sealed in the edges to close the bag; said bag comprising a raisable tab (5) joined to the sheet (100) and provided with an adhesive portion (50) in such a way to hold the bag in rolled-up configuration in correspondence of an opening of the bag, in order to close the bag (300, 400);
**characterized in that**
said sheet (100) comprises opening means (M) to open said bag (300, 400) in such a way to generate an opening that provides access to a compartment of the bag (300, 400); said opening means (M) cooperating with said raisable tab (5) in such a way to permit the opening of the bag (300, 400) and/or facilitate the raising of the raisable tab (5).

11. The bag (300; 400) of claim 10, wherein said opening means (M) comprise a pre-cut tear-off line (55; 455) obtained in said sheet (100) or a tear-off band disposed in said sheet (100) and suitable for tearing the sheet, when the tear-off band is pulled.

12. The bag (300; 400) of claim 10 or 11, wherein the sheet (100) is a multilayer sheet comprising:
- a first side (3) suitable for facing the interior of the bag;
- a second side (4) suitable for facing the exterior of the bag; said second layer (4) comprising a set of cut lines (6) that define a raisable tab (5);
- a permanent adhesive layer (71) disposed between the first layer (3) and the second layer (4) of the multilayer sheet, in such a way to couple the first layer (3) with the second layer (4);
- a non-permanent adhesive layer (70) disposed on one side (54) of the raisable tab (5) facing the first layer (3) in such a way to form an adhesive portion (50) of the raisable tab;
wherein said cut lines (6) that define the raisable tab are obtained on the second layer (4);
said adhesive portion (50) of the raisable tab occupies more than 50% of the surface of the raisable tab,
the bag (200) is of roll-up type, in such a way that a portion of the bag in correspondence of its opening can be rolled up in rolled-up configuration,
the raisable tab (5) is disposed in such a way that said rolled-up portion of the bag can be held in such rolled-up configuration by means of the adhesive portion (50) of the raisable tab.

13. The bag (300) of claim 12 when depending on claim 11, wherein said pre-cut line (55) or said tear-off band are obtained from one end to another end of the sheet in such a way to be turned in loop configuration around the bag in order to separate an upper portion (56) of the bag;
a portion of the pre-cut line (55) or of the tear-off band crossing the raisable tab (5) or being tangent or coincident with a section of one edge of the adhesive portion (50) of the raisable tab or of the end portion (51) of the raisable tab.

14. The bag (400) of claim 12 when depending on claim 11, wherein said pre-cut line (455) or said tear-off band is obtained in continuous mode on the first layer (3) and said pre-cut line (455) or said tear-off band is interrupted on the second layer, in correspondence of the raisable tab (5).

15. The bag (400) of claim 14, wherein the length of said pre-cut line (455) or tear-off band is lower than half of the length of the sheet.
